(19) Europäisches Patentamt
European Patent Office
Office européen des brevets

(11) **EP 2 631 272 A1**

(12) **EUROPEAN PATENT APPLICATION**
published in accordance with Art. 153(4) EPC

(43) Date of publication:
**28.08.2013 Bulletin 2013/35**

(51) Int Cl.:
*C08L 33/06* (2006.01)     *B32B 15/082* (2006.01)

(21) Application number: **11834036.3**

(22) Date of filing: **18.10.2011**

(86) International application number:
**PCT/JP2011/005816**

(87) International publication number:
**WO 2012/053190 (26.04.2012 Gazette 2012/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2010   JP 2010235999**

(71) Applicant: **Kaneka Corporation**
**Osaka 530-8288 (JP)**

(72) Inventors:
• **ISHIMARU, Fujio**
  **Osaka 566-0072 (JP)**
• **SHIMAMOTO, Yukihiro**
  **Osaka 566-0072 (JP)**
• **AOYAMA, Taizo**
  **Osaka 566-0072 (JP)**
• **NISHIMURA, Kimihide**
  **Hyogo 676-8688 (JP)**

(74) Representative: **Vossius & Partner**
**Siebertstrasse 4**
**81675 München (DE)**

(54) **(METH)ACRYLIC RESIN FILM**

(57)     Disclosed herein is a (meth)acrylic resin film excellent in adhesiveness to vapor-deposited metal and external appearance. The (meth)acrylic resin film includes acrylic rubber particles (A) having an acid value of 0.2 mmol/g or more, wherein the acid value of the entire resin constituting the film is 0.15 mmol/g or more but 1.5 mmol/g or less.

**Description**

Technical Field

The present invention relates to a (meth)acrylic resin film.

Background Art

In recent years, metallic appearances are very favored in the fields of automobiles, mobile phones, personal computers, house appliances, and the like. Conventionally, metallic appearance has been created by plating a substrate with metal because when a metallic member is used to give metallic appearance to a product, the product becomes heavy as a whole. However, such a method results in high environmental load due to for example, the use of a solvent. For this reason, a method using no solvent is employed, in which an appearance similar to that of metal is given by bonding a metal vapor-deposited PET film to a substrate. However, PET film has great difficulty in three-dimensional forming and therefore cannot be applied to deep-draw molds, is poor in surface transferability of embossed patterns, is likely to be scratched due to its low surface hardness, and is discolored and deteriorated due to its poor weather resistance and therefore limited to indoor use. For this reason, its applications are limited because a surface coating layer needs to be provided to improve scratch resistance for use in vehicle interiors and exteriors or home appliance exteriors or an acrylic resin film needs to be bonded to impart weather resistance.

Acrylic resin film is known as a film that can be easily three-dimensionally formed, but is generally very poor in adhesiveness to vapor-deposited metal and therefore cannot be used as a film for metal vapor-deposition. A film having improved adhesiveness to metal has been disclosed (Patent Document 1). In this case, adhesiveness to metal is improved by increasing the amount of acrylic rubber to exceed the range of normal use. However, this film has low transparency due to an increase in the amount of rubber, and its adhesiveness to metal is superior to a conventional acrylic resin film but inferior to a PET film commonly used as a film for vapor deposition.

PRIOR ART DOCUMENTS

Patent Documents

Patent Document 1: JP-A-59-46784

DISCLOSURE OF THE INVENTION

Problems to be Solved by the Invention

Under the above circumstances, the present inventors have intensively studied to improve the adhesiveness of an acrylic resin film to metal and have made attempts to improve metal vapor-deposition properties by introducing acid. However, it has been found that the resulting film has another problem that it has many die lines and resin-derived fine foreign particles (fisheyes) and is therefore poor in external appearance. When metal is vapor-deposited with such a film to give metallic appearance, poor external appearance of the film is further emphasized.

It is therefore an object of the present invention to provide a (meth)acrylic resin film excellent in adhesiveness to vapor-deposited metal and external appearance. Means for Solving the Problems

In order to achieve the above object, the present inventors have intensively studied and, as a result, have found that, even when a matrix resin does not have an acid value, an acrylic resin film having excellent adhesiveness to metal comparable to that of PET and excellent external appearance can be obtained by using acrylic rubber particles (A) having an acid value, which has led to the completion of the present invention.

That is, the present invention is directed to a (meth)acrylic resin film including acrylic rubber particles (A) having an acid value of 0.2 mmol/g or higher, wherein the acid value of the entire resin constituting the film is 0.15 mmol/g or higher but 1.5 mmol/g or lower.

The (meth)acrylic resin film according to the present invention preferably includes a thermoplastic resin (B) having no acid group and no acid anhydride group.

In the (meth)acrylic resin film according to the present invention, the acrylic rubber particles (A) preferably contain at least one kind of acrylic acid units or methacrylic acid units.

In the (meth)acrylic resin film according to the present invention, 3 parts by weight or more but 20 parts by weight or less of (meth)acrylic acid units are preferably contained in 100 parts by weight of the acrylic rubber particles (A).

In the (meth)acrylic resin film according to the present invention, the acrylic rubber particles (A) are preferably obtained by polymerizing a monomer mixture (E) containing an unsaturated carboxylic acid and/or its derivative in the presence of acrylic acid alkyl ester-based crosslinked elastic particles (a) having an average particle size of 500 to 3000 Å.

In the (meth)acrylic resin film according to the present invention, the resin constituting the film preferably has a Tg of 120°C or lower.

The present invention is also directed to a metal-laminated (meth)acrylic resin film obtained by directly vapor-depositing metal or metal oxide on the (meth)acrylic resin film according to the present invention.

The present invention is also directed to a metal-laminated (meth)acrylic resin sheet obtained by bonding a resin film or sheet to a metal layer surface of the metal-laminated (meth)acrylic resin film according to the present invention with an adhesive layer being interposed between them.

Effects of the Invention

The (meth)acrylic resin film according to the present invention has excellent adhesiveness to metal and excellent external appearance. In addition, the (meth)acrylic resin film according to the present invention has excellent film winding properties (processability).

PREFERRED MODE FOR CARRYING OUT THE INVENTION

The (meth)acrylic resin film according to the present invention includes acrylic rubber particles (A) having an acid value of 0.2 mmol/g or more. It is known that the presence of acid groups or acid anhydride groups in the resin improves the adhesiveness of the resin to metal, and the adhesiveness to vapor-deposited metal is also improved. It is considered that this results from ionic interaction between the acid groups or the acid anhydride groups and the metal. It is known that adhesiveness to metal can be achieved by allowing the entire resin to contain a certain amount or more of acid groups or acid anhydride groups. However, the present inventors have surprisingly found as a result of their studies that, even when a thermoplastic resin (B) to be blended as a matrix resin does not contain any acid groups and/or acid anhydride groups, the (meth)acrylic resin film exhibits adhesiveness to metal as long as the acrylic rubber particles (A) contain acid groups or acid anhydride groups. Further, when the acid group or acid anhydride group content in the resin is high, the melt viscosity of the resin is increased and therefore film formation becomes difficult, which makes it difficult to obtain a film having excellent external appearance. Further, in this case, kneading is difficult and therefore unkneaded portions in the formed film are seen as fine foreign particles (fisheyes), which deteriorates the external appearance of the film. On the other hand, when the thermoplastic resin (B) to be blended as a matrix resin with the acrylic rubber particles (A) does not contain any acid groups or acid anhydride groups but the acrylic rubber particles (A) contain acid groups or acid anhydride groups, the viscosity of the entire resin can be kept low and a film excellent in adhesiveness to metal and external appearance can be obtained. In this case, fine foreign particles (fisheyes) resulting from unkneaded portions are hardly observed under normal extrusion conditions.

The "acid value" as used in the present invention refers to a value determined by common neutralization titration, more specifically a value determined by a method that will be described later with reference to Examples. When acid anhydride groups are contained in a resin, the acid anhydride groups are ring-opened to generate acid groups, and the total amount of acid groups is regarded as the acid value. This is because the ratio of conversion of acid groups to acid anhydride groups widely varies depending on extrusion conditions.

The acid value of the acrylic rubber particles (A) contained in the (meth)acrylic resin film according to the present invention is 0.2 mmol/g or higher, preferably 0.3 mmol/g or higher, more preferably 0.5 mmol/g or higher. It is to be noted that the upper limit of the acid value is not particularly limited, but is preferably 2.5 mmol/g or lower, more preferably 1.5 mmol/g or lower.

The acrylic rubber particles (A) used in the present invention preferably contain at least one kind of acrylic acid units or methacrylic acid units, and 3 parts by weight or more but 20 parts by weight or less of (meth)acrylic acid units is preferably contained in 100 parts by weight of the acrylic rubber particles (A).

The acid value of the entire resin constituting the (meth)acrylic resin film according to the present invention is 0.15 mmol/g or higher but 1.5 mmol/g or lower, but from the viewpoint of film formation, the upper limit thereof is preferably 1.0 mmol/g, more preferably 0.8 mmol/g. On the other hand, the lower limit thereof is preferably 0.3 mmol/g, more preferably 0.5 mmol/g.

The (meth)acrylic resin film according to the present invention may be formed using a (meth)acrylic resin composition (hereinafter, sometimes simply referred to as the "(meth)acrylic resin") containing the acrylic rubber particles (A). In this case, in addition to the effects of the present invention, excellent resistance to cracking on bending or surface hardness is imparted to the resulting (meth)acrylic resin film. Preferred examples of the acrylic rubber particles (A) include, but are not limited to, the following two embodiments.

As the first preferred embodiment, acrylic rubber particles (A-1) can be mentioned, which are obtained by heat-treating a (meth)acrylic resin (C) obtained by polymerizing, in the presence of acrylic acid alkyl ester-based crosslinked elastic particles (a), a monomer mixture (a-1) containing a monomer having a group capable of generating an acid group by heat treatment.

As the second preferred embodiment, acrylic rubber particles (A-2) can be mentioned, which are obtained by polymerizing, in the presence of acrylic acid alkyl ester-based crosslinked elastic particles (a), a monomer mixture (E) containing an unsaturated carboxylic acid and/or its derivative.

A preferred example of the acrylic acid alkyl ester-based crosslinked elastic particles (a) used in the present invention is those obtained by copolymerizing, in at least one step (copolymerization may be performed in multiple steps by adjusting the composition of monomers or reaction conditions), 100 parts by weight of a monomer mixture (b) containing 50 to 100 wt% of an acrylic acid alkyl ester monomer and 0 to 50 wt% of a methacrylic acid alkyl ester monomer with 0.5 to 5 parts by weight of a polyfunctional monomer having two or more non-conjugated double bonds per molecule. The monomer mixture (b) more preferably contains 60 to 100 wt% of an acrylic acid alkyl ester monomer and 0 to 40 wt% of a methacrylic acid alkyl ester monomer. When the amount of the methacrylic acid alkyl ester monomer is 50 wt% or less, the resulting film is excellent in resistance to bending.

The reactive monomer contained in the monomer mixture (b), such as acrylic acid alkyl ester or methacrylic acid alkyl ester, is not particularly limited, but is preferably one having an alkyl group having 1 to 12 carbon atoms from the viewpoint of polymerization reactivity or cost. Specific examples of such a reactive monomer include methyl methacrylate, ethyl methacrylate, propyl methacrylate, n-butyl methacrylate, methyl acrylate, and n-butyl acrylate. These monomers may be used singly or in combination of two or more of them.

If necessary, the monomer mixture (b) may be copolymerized with an ethylene-based unsaturated monomer copolymerizable with the acrylic acid alkyl ester monomer and the methacrylic acid ester monomer. Examples of the copolymerizable ethylene-based unsaturated monomer include: vinyl halides such as vinyl chloride and vinyl bromide; vinyl cyanides such as acrylonitrile and methacrylonitrile; aromatic vinyls such as vinyl toluene, vinyl naphthalene, styrene, and $\alpha$-methylstyrene; vinyl esters such as vinyl formate, vinyl acetate, and vinyl propionate; vinylidene halides such as vinylidene chloride and vinylidene fluoride; acrylic acid and its salts such as acrylic acid, sodium acrylate, and calcium acrylate; acrylic acid alkyl ester derivatives such as $\beta$-hydroxyethyl acrylate, dimethylaminoethyl acrylate, glycidyl acrylate, acrylamide, and N-methylolacrylamide; methacrylic acid and its salts such as methacrylic acid, sodium methacrylate, and calcium methacrylate; and methacrylic acid alkyl ester derivatives such as methacrylamide, $\beta$-hydroxyethyl methacrylate, dimethylaminoethyl methacrylate, and glycidyl methacrylate. These monomers may be used singly or in combination of two or more of them.

The acrylic acid alkyl ester-based crosslinked elastic particles (a) used in the present invention are obtained by copolymerization with a polyfunctional monomer having two or more non-conjugated reactive double bonds per molecule (hereinafter, sometimes simply referred to as the "polyfunctional monomer"), and therefore usually exhibit crosslink elasticity. Further, it is considered that one of the reactive double bonds of the polyfunctional monomer remaining unreacted serves as a grafting point during polymerization of a monomer mixture (a-1) in the presence of the acrylic acid alkyl ester-based crosslinked elastic particles (a) so that part of the monomer mixture (a-1) is grafted on the acrylic acid alkyl ester-based crosslinked elastic particles (a).

Examples of the polyfunctional monomer used in the present invention include allyl methacrylate, allyl acrylate, triallyl cyanurate, triallyl isocyanurate, diallyl phthalate, diallyl maleate, divinyl adipate, divinylbenzene ethylene glycol dimethacrylate, divinylbenzene ethylene glycol diacrylate, diethylene glycol dimethacrylate, diethylene glycol diacrylate, triethylene glycol dimethacrylate, triethylene glycol diacrylate, trimethylolpropane trimethacrylate, trimethylolpropane triacrylate, tetramethylolmethane tetramethacrylate, tetramethylolmethane tetraacrylate, dipropylene glycol dimethacrylate, and dipropylene glycol diacrylate. These polyfunctional monomers may be used singly or in combination of two or more of them.

The amount of the polyfunctional monomer to be copolymerized is preferably 0.5 to 5 parts by weight, more preferably 1.0 to 4 parts by weight with respect to 100 parts by weight of the monomer mixture (b). It is preferred that the amount of the polyfunctional monomer to be copolymerized is 0.5 to 5 parts by weight from the viewpoint of resistance to bending and resin flowability.

The average particle size of the acrylic acid alkyl ester-based crosslinked elastic particles (a) used in the present invention is preferably 500 to 3000 Å, more preferably 500 to 2000 Å, even more preferably 500 to 1500 Å, particularly preferably 600 to 1500 Å. It is preferred that the average particle size is 500 to 3000 Å from the viewpoint of resistance to bending, resistance to whitening on bending, and transparency. It is to be noted that the average particle size is a value measured by a light scattering method using a particle size analyzer (MICROTRAC UPA 150 manufactured by LEED & NORTHRUP INSTRUMENTS).

The above-described (meth)acrylic resin (C) is preferably one obtained by polymerizing, in the presence of the above-described acrylic acid alkyl ester-based crosslinked elastic particles (a), a monomer mixture (a-1) containing a monomer having a group capable of generating an acid group by heat treatment. More preferably, the (meth)acrylic resin (C) is one obtained by polymerizing, in the presence of 5 to 75 parts by weight of the above-described acrylic acid alkyl ester-based crosslinked elastic particles (a), 95 to 25 parts by weight of the monomer mixture (a-1) in at least one step.

The acrylic rubber particles (A-2) are preferably those obtained by polymerizing, in the presence of the above-described acrylic acid alkyl ester-based crosslinked elastic particles (a), a monomer mixture (E) containing an unsaturated carboxylic acid and/or its derivative.

In the present invention, when the total amount of the acrylic rubber particles (A-2) is defined as 100 wt%, the amount of the acrylic acid alkyl ester-based crosslinked elastic particles (a) contained in the acrylic rubber particles (A-2) is preferably higher than 30 wt% but 60 wt% or lower, more preferably 35 to 55 wt%. It is preferred that the amount of the acrylic acid alkyl ester-based crosslinked elastic particles (a) contained in the acrylic rubber particles (A-2) falls within the above range because a latex obtained by emulsion polymerization of the monomer mixture (E) containing an unsaturated carboxylic acid and/or its derivative is stable.

The monomer mixture (a-1) is preferably one containing 80 to 99 wt% of a (meth)acrylic acid linear alkyl ester and 1 to 20 wt% of (meth)acrylic acid tertiary butyl ester, more preferable one containing 85 to 99 wt% of a (meth)acrylic acid linear alkyl ester and 1 to 15 wt% of (meth)acrylic acid tertiary butyl ester. When the (meth)acrylic acid tertiary butyl ester content is 20 wt% or less, corrosion is less likely to occur in production equipment and the resulting film can have improved alkali resistance.

The (meth)acrylic acid linear alkyl ester for use in the monomer mixture (a-1) is not particularly limited, but is preferably one having an alkyl group having 1 to 12 carbon atoms in terms of polymerization reactivity or cost. Specific examples of such (meth)acrylic acid linear alkyl ester include methyl methacrylate, ethyl methacrylate, propyl methacrylate, n-butyl methacrylate, methyl acrylate, and n-butyl acrylate. These monomers may be used singly or in combination of two or more of them.

If necessary, the monomer mixture (a-1) may be copolymerized with an ethylene-based unsaturated monomer or the like copolymerizable with the (meth)acrylic acid linear alkyl ester monomer and/or the (meth)acrylic acid tertiary butyl ester monomer. Specific examples of the copolymerizable ethylene-based unsaturated monomer are the same as those used for obtaining the crosslinked elastic particles (a).

The monomer mixture (E) is preferably one containing an unsaturated carboxylic acid and/or its derivative in an amount higher than 10 wt% but 35 wt% or lower, a methacrylic acid alkyl ester in an amount of 50 wt% or higher but lower than 90 wt%, and an acrylic acid alkyl ester in an amount of 0 wt% or higher but lower than 40 wt%, more preferably one containing an unsaturated carboxylic acid and/or its derivative in an amount higher than 10 wt% but 30 wt% or lower, a methacrylic acid alkyl ester in an amount of 60 wt% or higher but lower than 90 wt%, and an acrylic acid alkyl ester in an amount of 0 wt% or higher but lower than 40 wt%.

Specific examples of the unsaturated carboxylic acid and/or its derivative include methacrylic acid, acrylic acid, anhydrides thereof, maleic acid, maleic anhydride, fumaric acid, $\alpha$-hydroxymethyl acrylare, itaconic acid, citraconic acid, mesaconic acid, aconitic acid, methylenemalonic acid, and $\alpha$-methyleneglutaric acid. From the viewpoint of polymerizability, methacrylic acid and acrylic acid are preferred. These monomers may be used singly or in combination of two or more of them.

The (meth)acrylic acid linear alkyl ester and the (meth)acrylic acid tertiary butyl ester used in the monomer mixture (a-1) can be used also in the monomer mixture (E). If necessary, as in the case of the monomer mixture (a-1), the monomer mixture (E) may contain a copolymerizable ethylene-based unsaturated monomer that may be contained in the monomer mixture (a-1).

In the polymerization of the monomer mixture (a-1) or (E) in the presence of the acrylic acid alkyl ester-based crosslinked elastic particles (a), some monomer mixtures (a-1) or (E) may be grafted on the acrylic acid alkyl ester-based crosslinked elastic particles (a), and others may form a component (free polymer) that is an ungrafted polymer not subjected to a graft reaction with the acrylic acid alkyl ester-based crosslinked elastic particles (a).

The graft ratio of the acrylic rubber particles (A-1) (including those before heat treatment) or the acrylic rubber particles (A-2) is preferably 50 to 200%, more preferably 70 to 160%. It is preferred that the graft ratio falls within the above range in terms of the colorless transparency and resistance to whitening on bending of the resulting (meth)acrylic resin film. It is to be noted that the graft ratio is calculated in the following manner. That is, 1 g of the acrylic rubber particles (A-1) (including those before heat treatment) or the acrylic rubber particles (A-2) is dissolved in 40 mL of methyl ethyl ketone, centrifuged using a centrifugal separator (CP60E manufactured by Hitachi Koki Co., Ltd) at 3000 rpm for 1 hour, and separated into methyl ethyl ketone-insoluble matter and soluble matter by decantation. The obtained methyl ethyl ketone-insoluble matter is regarded as an acrylic acid ester-based crosslinked elastic material-containing graft copolymer to calculate the graft ratio from the following equation:

Graft ratio (%) = {(weight of methyl ethyl ketone-insoluble matter - weight of acrylic acid alkyl ester-based crosslinked elastic particles (a))/weight of acrylic acid alkyl ester-based crosslinked elastic particles (a)} $\times$ 100

A method for producing the acrylic rubber particles (A) used in the present invention is not particularly limited, and a well-known method such as an emulsion polymerization method, an emulsion-suspension polymerization method, or a suspension polymerization method can be applied, but the emulsion polymerization method is particularly preferred.

As an initiator of polymerization of the monomer mixture (b) or polymerization of the monomer mixture (a-1) or (E) in the presence of the acrylic acid alkyl ester-based crosslinked elastic particles (a), any well-known initiator such as an organic peroxide, an inorganic peroxide, or an azo compound can be used. Specific examples of such an initiator include: organic peroxides such as tertiary butyl hydroperoxide, 1, 1, 3, 3-tetramethylbutyl hydroperoxide, succinic acid peroxide, tert-butyl peroxymaleate, cumene hydroperoxide, and benzoyl peroxide; inorganic peroxides such as potassium persulfate and sodium persulfate; and oil-soluble initiators such as azobisisobutyronitrile. These initiators may be used singly or in combination of two or more of them. These initiators may be used as a common redox-type initiator combined with a reducing agent such as sodium sulfite, sodium thiosulfate, sodium formaldehyde sulfoxylate, ascorbic acid, hydroxyacetonic acid, ferrous sulfate, or a complex of ferrous sulfate and disodium ethylenediaminetetraacetate.

The organic peroxide can be added by a well-known addition method such as a method in which the organic peroxide is directly added to a polymerization system, a method in which the organic peroxide is mixed with a monomer and then added, or a method in which the organic peroxide is dispersed in an aqueous emulsifier solution and then added, but in terms of transparency, the method in which the organic peroxide is mixed with a monomer and then added or the method in which the organic peroxide is dispersed in an aqueous emulsifier solution and then added is preferred.

Further, in terms of polymerization stability and particle size control, the organic peroxide is preferably used as a redox-type initiator combined with an inorganic reducing agent such as a bivalent iron salt and/or an organic reducing agent such as sodium formaldehyde sulfoxylate, reducing sugar, or ascorbic acid.

A surfactant used in the above-described emulsion polymerization is not particularly limited, either, and any surfactant can be used as long as it is a common surfactant for emulsion polymerization. Specific examples of such a surfactant include: anionic surfactants such as sodium alkylsulfonate, sodium alkylbenzenesulfonate, sodium dioctylsulfosuccinate, and sodium lauryl sulfate; and nonionic surfactants such as reaction products of alkylphenols or aliphatic alcohols and propylene oxide or ethylene oxide. These surfactants may be used singly or in combination of two or more of them. If necessary, a cationic surfactant such as an alkylamine salt may be further used.

The amount of the initiator added in polymerization of the monomer mixture (b) or in polymerization of the monomer mixture (a-1) or (E) in the presence of the acrylic acid alkyl ester-based crosslinked elastic particles (a) is preferably in the range of 0.03 to 3.5 parts by weight, more preferably 0.1 to 2.5 parts by weight, even more preferably 0.2 to 1.5 parts by weight with respect to 100 parts by weight of the monomer mixture (b) or the monomer mixture (a-1) or (E). It is preferred that the amount of the initiator added falls within the above range in terms of the mechanical strength and molding processability of the resulting (meth)acrylic resin composition.

In the present invention, a chain transfer agent can be used to control the molecular weight of the polymer obtained by polymerization of the monomer mixture (a-1) or (E). Examples of the chain transfer agent which can be used include methyl mercaptan, ethyl mercaptan, isopropyl mercaptan, n-butyl mercaptan, tert-butyl mercaptan, n-hexyl mercaptan, n-octyl mercaptan, n-dodecyl mercaptan, ethyl thioglycolate, mercaptoethanol, thio-β-naphthol, thiophenol, and dimethyldisulfide. These chain transfer agents may be used singly or in combination of two or more of them.

The amount of the chain transfer agent used is preferably in the range of 0.02 to 2.2 parts by weight, more preferably 0.1 to 1.5 parts by weight, even more preferably 0.2 to 1.0 parts by weight with respect to 100 parts by weight of the monomer mixture (a-1) or (E). It is preferred that the amount of the chain transfer agent used falls within the above range in terms of the mechanical strength and molding processability of the resulting (meth)acrylic resin composition.

When the acrylic rubber particles (A) are obtained as a latex by emulsion polymerization or the like, they can be separated and collected by operation such as coagulation, cleaning, and drying or by treatment such as spray drying or freeze drying.

A first preferred embodiment of the present invention preferably contains a product obtained by subjecting the above-described (meth)acrylic resin (C) to heat treatment. The "heat treatment" as used herein refers to a process of heating the (meth)acrylic resin (C) at a predetermined temperature to cause thermal desorption of a tert-butyl group as isobutylene from a (meth)acrylic acid tert-butyl ester unit to convert a tert-butyl oxycarbonyl group in the unit to a carboxylic acid group.

The heat treatment is not particularly limited as long as the (meth)acrylic resin (C) can be heated, but melt-kneading using an extruder is preferred as a method capable of uniformly heating the (meth)acrylic resin (C).

The temperature of the heat treatment for forming a carboxylic acid group is preferably 200 to 320°C, more preferably 220 to 300°C. It is preferred that the temperature of the heat treatment is 200 to 320°C because desorption of the tert-butyl group is likely to occur and therefore the carboxylic acid group is easily formed and the resulting (meth) acrylic resin composition has good transparency.

In the present invention, when the heat treatment is performed using an extruder, examples of the extruder include a single-screw extruder, a twin-screw extruder, and a multi-screw extruder. However, the extruder is preferably a single-screw extruder, more preferably a twin-screw extruder. Examples of the double-screw extruder include a non-intermeshing co-rotating-type twin-screw extruder, an intermeshing co-rotating-type twin-screw extruder, a non-intermeshing counter-rotating-type twin-screw extruder, and an intermeshing counter-rotating-type twin-screw extruder. These extruders may be used singly or connected in serial.

When such an extruder is used, in order to remove isobutylene produced as a byproduct, the extruder preferably has a vent port, more preferably multiple vent ports so that the pressure in the extruder can be reduced to atmospheric pressure or lower. Further, the extruder used in the present invention preferably has multiple vent ports, but the pressure at the vent port is preferably controlled at a gauge pressure of -0.09 MPa or lower. If the pressure at the vent port is higher than -0.09 MPa, the efficiency of removing the residual monomers or the byproduct tends to be reduced.

In the present invention, the heat treatment may be performed using, instead of the extruder, an appropriate reactor for high-viscosity materials such as a horizontal twin-screw reactor (e.g., BIVOLAK manufactured by Sumitomo Heavy Industries, Ltd.) or a vertical twin-screw mixing tank (e.g., SUPERBLEND manufactured by Sumitomo Heavy Industries, Ltd.).

A batch-type reactor (pressure vessel) used when a polymer is produced by a batch-type reaction is not particularly limited as long as it has a structure that can heat the polymer. An example of such a batch-type reactor is a mixing tank MAXBLEND manufactured by Sumitomo Heavy Industries, Ltd.

Further, meshes obtained by sintering stainless steel fibers, such as DENAFILTER manufactured by Nagase Co., Ltd., may be used in multi-layered manner for the purpose of removing any foreign matter contained in the resin during pelletization.

In the present invention, the heat treatment is preferably performed for 30 minutes or less, more preferably 20 minutes or less. If the reaction time exceeds 30 minutes, decomposition of the resin occurs due to thermal history, and the yellowness index of the resulting film tends to increase.

In the present invention, when the (meth)acrylic resin (C) is subjected to heat treatment, commonly-used agents such as weathering stabilizers e.g., antioxidants, thermal stabilizers, light stabilizers, UV absorbers, and radical scavengers; catalysts, plasticizers, lubricants, antistatic agents, colorants, shrinkage inhibitors, antimicrobial and deodorizing agents, and delustrants may be added alone or in combination of two or more of them without impairing the objects of the present invention. Further, when the thermoplastic resin (B) that will be described later is blended with the (meth)acrylic resin composition, the (meth)acrylic resin (C) may be subjected to heat treatment together with the thermoplastic resin (B). It is to be noted that these additives may be added when the (meth)acrylic resin composition is molded.

Examples of the thermoplastic resin (B) used in the present invention include a lactone-cyclized methacrylic resin, a (meth)acrylic resin, a styrene-based resin, a methyl methacrylate-styrene copolymer, a polyethylene terephthalate resin, and a polybutylene terephthalate resin. Among them, the (meth)acrylic resin is preferred in terms of compatibility, weather resistance, and transparency.

When the (meth)acrylic resin is used as the thermoplastic resin (B) in the present invention, the (meth)acrylic resin is obtained by copolymerizing, in at least one step, a monomer mixture preferably containing 50 to 100 wt% of a methacrylic acid alkyl ester, 0 to 50 wt% of an acrylic acid alkyl ester, and 0 to 20 wt% of (meth)acrylic acid, more preferably containing 60 to 100 wt% of a methacrylic acid alkyl ester, 0 to 40 wt% of an acrylic acid alkyl ester, and 0 to 15 wt% of (meth)acrylic acid. Particularly, when importance is given to the hardness and rigidity of the resulting film, the monomer mixture for producing the (meth)acrylic resin preferably contains 80 wt% or more of methyl methacrylate, particularly preferably 85 wt% or more of methyl methacrylate.

The (meth)acrylic resin composition used in the present invention may contain any well-known rubber-containing (meth)acrylic resin. However, in this case, some adjustments needs to be made by blending a component that can give an acid value, such as the above-described resin component, to satisfy the acid value required in the present invention.

"MI (Melt Index)" as used in the present invention refers to the weight of a resin flowing out from a cylindrical container containing a certain amount of the resin for 10 minutes under a given load at a given temperature. The value of MI represents flowability at the temperature. More specifically, MI is a value determined by subjecting pellets to measurement using a melt indexer (manufactured by Yasuda Seiki Seisakusho Ltd.) under a load of 10 kg at 230°C

The lower limit of MI of the (meth)acrylic resin composition (entire resin) used in the present invention measured under a load of 10 kg at 230°C is preferably 1.0 g/10 min or higher, more preferably 2.0 g/10 min or higher in terms of molding processability during film formation. The upper limit of MI is preferably 9.0 g/10 min or lower.

The "molding processability" as used in the present invention refers to the properties by virtue of which, when a resin is processed into a film by a melt extrusion method such as melt-extrusion film molding or blow molding, defects such as transfer failure, silver streaks, fisheyes, die lines, thickness unevenness, and foaming are less likely to occur and therefore fine molding can be easily performed.

The average particle size of the acrylic rubber particles (A) is preferably 55 nm or more but 500 nm or less, more preferably 60 nm or more but 300 nm or less, even more preferably 70 nm or more but 200 nm or less, most preferably 75 nm or more but 180 nm or less. If the average particle size of the acrylic rubber particles (A) is less than 55 nm, the shock resistance and resistance to cracking on bending of the resulting film tend to be reduced. If it exceeds 500 nm, the transparency of the resulting film tends to be reduced. Here, the average particle size of the acrylic rubber particles is measured in a latex state by a light scattering method using a Microtrac particle size distribution analyzer MT3000 manufactured by NIKKISO Co., Ltd.

An acrylic rubber particle (A) content is preferably 5 to 100 wt%, more preferably 5 to 70 wt%, even more preferably 5 to 55 wt% with respect to 100 wt% of the entire resin. When the resin composition is composed of the acrylic rubber particles and the (meth)acrylic resin, the total amount of the acrylic rubber particles (A) and the (meth)acrylic resin is regarded as 100 wt%. When the acrylic rubber particle (A) content is less than 5 wt%, the elongation at tensile fracture of the resulting film is less likely to be reduced, and therefore cracking is less likely to occur when the film is cut. When it is 5 to 55 wt%, the hardness and rigidity of the resulting film tend to be improved.

The amount of the acrylic acid alkyl ester-based crosslinked elastic particles (a) is preferably 5 to 45 wt%, more preferably 10 to 40 wt%, even more preferably 10 to 30 wt%, most preferably 15 to 25 wt% with respect to 100 wt% of the entire resin. When it is less than 5 wt%, the elongation at tensile fracture of the resulting film is less likely to be reduced, and therefore cracking is less likely to occur when the film is cut. If it exceeds 45 wt%, there is a case where viscosity is increased or hardness is reduced.

In the present invention, commonly-used agents such as weathering stabilizers e.g., antioxidants, thermal stabilizers, light stabilizers, UV absorbers, and radical scavengers; catalysts, plasticizers, lubricants, antistatic agents, colorants, shrinkage inhibitors, antimicrobial and deodorizing agents, and delustrants may be added alone or in combination of two or more of them without impairing the objects of the present invention.

The glass transition temperature (Tg) of the (meth)acrylic resin composition constituting the film according to the present invention is preferably 120°C or lower. When it is 120°C or lower, an interface is made rough due to heat during vapor deposition, and therefore high adhesiveness to metal can be achieved by the anchoring effect. When the glass transition temperature is higher than 120°C, the film is hardly influenced by heat during vapor deposition, which is disadvantageous in terms of poor adhesiveness to metal.

The (meth)acrylic resin film according to the present invention is successfully processed by a commonly-used melt-extrusion method such as an inflation method or a T-die extrusion method, a calender method, a solvent casting method, or the like. When the inflation method or the T-die extrusion method is used, in order to prevent poor kneading, a film is preferably formed by once preparing pellets composed of the (meth)acrylic resin composition and any additive, which is blended therewith if necessary, by extrusion using an extruder and then extruding the pellets into film using an extruder used in the inflation method or the T-die extrusion method. The extruder used in preparing pellets preferably has one or more vent ports. This is because poor external appearance caused by foaming of water during film formation can be prevented by removing water generated by conversion of an acid to its anhydride by heating through the vent port. The extruder used may be a single-screw extruder, a multi-screw extruder, or the like. For the same reason as described above, the extruder used for film formation preferably has a vent(s).

When a film is molded from the (meth)acrylic resin composition, both surfaces of the film may be simultaneously brought into contact with rollers or metal belts to further improve the surface properties of the film, if necessary. Further, the film may have a layered structure by lamination or multi-layer extrusion or may be modified by biaxial stretching according to its intended use. When multi-layer extrusion is performed, at least one layer of well-known transparent film, matt film, color film, pressure-sensitive adhesive, or adhesive can be laminated on one surface of the film.

Embossing or hairline processing may be performed on the film by passage through a roller having grooves by which embossing or hairline processing can be performed on a molten resin in the process of film formation or a plasticized resin obtained by heating the film. Alternatively, hairlines may be formed by scratching the surface of the film with a brush or the like.

On the surface of the (meth)acrylic resin film according to the present invention, a metal film can be formed by directly vapor-depositing metal or metal oxide. This makes it possible to obtain a metal-laminated (meth)acrylic resin film according to the present invention. Various methods can be applied to form a metal film on the (meth)acrylic resin film, but a dry process for forming a dry thin film, that is, a vapor-deposition method such as vacuum vapor-deposition, sputtering, ion-plating, ion assisted deposition, or CVD is preferred, and vacuum vapor-deposition and sputtering are particularly preferred.

The metal to be vapor-deposited preferably contains at least one metal such as aluminum, tin, indium, gold, silver, or chromium. Even when metal oxide such as silicon oxide is vapor-deposited, the film according to the present invention is superior in adhesiveness to conventional acrylic films. When the metal film is for decorative purpose, the thickness of the metal film is preferably 150 to 1500 angstroms. When a substrate is allowed to be seen through the film, a metal film having a thickness of 150 to 500 angstroms is used so that light can slightly pass through the metal film. On the other hand, when a substrate is not allowed to be seen through the film, a metal film having a thickness of 500 or more angstroms is used. If the thickness of the metal film is too large, the adhesive strength between a vapor-deposited layer and a film layer is reduced, and therefore a metal film having a thickness of 2000 or more angstroms is not often used for decorative purpose. However, this shall not apply when gas barrier properties or conductive properties need to be imparted.

The vapor-deposited layer may be formed by laminating two or more metal films. Further, when the metal film needs to be protected, a protective film may be formed by coating or spraying.

The (meth)acrylic resin film or metal-laminated (meth)acrylic resin film according to the present invention can be bonded to the surface of a plastic component that is a molded product. Examples of a method for such bonding include film molding or laminate injection press molding in which the film is placed in a mold in advance and then the mold is filled with a resin by injection molding, or film molding, vacuum pressure molding, or TOM molding in which the film is pre-molded and placed in a mold and then the mold is filled with a resin by injection molding.

Further, before such molding, a film or sheet made of well-known resin may be laminated on the metal film surface and/or the acrylic resin surface of the metal-laminated (meth)acrylic resin film according to the present invention. Examples of the resin to be laminated include polyvinyl chloride-based resin, polycarbonate-based resin, ABS-based resin, AS-based resin, MBS-based resin, MS-based resin, styrene-based resin, methacrylic resin, polyglutarimide, glutaric anhydride polymer, lactone-cyclized methacrylic resin, polyvinylidene fluoride, fluorine-based resin, polyethylene terephthalate resin, polybutylene terephthalate resin, TPO-based resin, polyethylene-based resin, and polypropylene-based resin. These resins may be used singly or in combination of two or more of them. A well-known primer may be applied onto the surface. The primer can be applied by a well-known method such as roll coating, bar coating, dipping, or spraying. The primer can be applied on the acrylic resin side and the metal film side of the metal-laminated (meth) acrylic resin film according to the present invention and on the resin to be laminated. However, when metal containing tin or indium is used in the metal film and a primer dissolved in an organic solvent such as ethyl acetate or methyl ethyl ketone is applied on the metal surface side, there may be a case where whitening occurs between the metal surface and a film laminated thereon so that a resulting film has poor external appearance. Therefore, a primer dissolved in water or a watersoluble solvent such as isopropyl alcohol is preferably used to prevent whitening. Alternatively, the primer may be applied on only a surface of a film to be laminated, which is opposed to the metal surface, without applying the primer onto the metal surface. In this case, lamination may be performed in a solvent-free state after drying. The metal surface and a base material may be bonded together with a double-sided adhesive tape without using a primer.

The resin to be laminated on the acrylic resin surface forms an outermost layer. Therefore, when a high hardness resin such as an acrylic resin having a high Tg is laminated, scratch resistance can be improved, and when a fluorine-containing resin such as PVDF or PVF or a fluorinated acrylic resin is used, chemical resistance can be improved. As a laminating method, any well-known method can be used. An example of such a method is one in which a film, a sheet, or a resin extruded from an extrusion die is laminated on the metal-laminated (meth)acrylic resin film according to the present invention by heat lamination using metal or rubber rollers, heat lamination using metal belts, press molding, or coating.

The (meth)acrylic resin film, the metal-laminated (meth)acrylic resin film, or the metal-laminated (meth)acrylic resin sheet according to the present invention can be used for, for example, interiors and exteriors of automobiles, interiors and exteriors of personal computers, interiors and exteriors of mobile phones, interiors and exteriors of solar cells, solar cell back sheets, imaging fields such as lenses, finders, filters, prisms, and Fresnel lenses for cameras, VTRs, and projectors, lens fields such as optical disc pick-up lenses for CD players, DVD players, and MD players, optical disc recording fields such as CD players, DVD players, and MD players, information device fields such as liquid crystal display films (e.g., liquid crystal light guide panels, diffuser plates, back sheets, reflective sheets, polarizer protective films, and phase difference films) and surface-protective films, optical communication fields such as optical fibers, optical switches, and optical connectors, automotive fields such as headlights, taillight lenses, inner lenses, instrument covers, sunroofs for automobiles, medical device fields such as eyeglasses, contact lenses, endoscope lenses, and medical supplies requiring sterilization, construction/building material fields such as road signs, bathroom facilities, floor materials, transparent panels for roads, double glass lenses, lighting windows, carports, illumination lenses, illumination covers, and siding boards for construction, cooking containers (dishes) for microwave oven, housings for home appliances, toys, sunglasses, and stationery products. Further, molded articles using the (meth)acrylic resin film, the metal-laminated (meth)acrylic resin film, or the metal-laminated (meth)acrylic resin sheet according to the present invention can be used also as alternatives to molded articles using transfer foil sheets.

On the other hand, molded articles including the acrylic resin film, the metal-laminated (meth)acrylic resin film, or the metal-laminated (meth)acrylic resin sheet according to the present invention can be used for, for example, interiors and exteriors of automobiles, interiors and exteriors of personal computers, interiors and exteriors of mobile phones, interiors and exteriors of solar cells, solar cell back sheets, imaging fields such as lenses, finders, filters, prisms, and Fresnel lenses for cameras, VTRs, and projectors, lens fields such as optical disc pick-up lenses for CD players, DVD players, and MD players, optical disc recording fields such as CD players, DVD players, and MD players, information device fields such as liquid crystal display films (e.g., liquid crystal light guide panels, diffuser plates, back sheets, reflective sheets, polarizer protective films, and phase difference films) and surface-protective films, optical communication fields such as optical fibers, optical switches, and optical connectors, automotive fields such as headlights, taillight lenses, inner lenses, instrument covers, and sunroofs for automobiles, medical device fields such as eyeglasses, contact lenses, endoscope lenses, and medical supplies requiring sterilization, construction/building material fields such as road signs, bathroom facilities, floor materials, transparent panels for roads, double glass lenses, lighting windows, carports, illumination lenses, illumination covers, and siding boards for construction, amusement fields such as interiors and exteriors of play equipment, Japanese pinball machines, and slot machines and exteriors of amusement attractions, signboard fields such as 3D signboards and signboards illuminated by light sources placed on the back side of acrylic panels, cooking containers (dishes) for microwave oven, housings for home appliances, toys, sunglasses, and stationery products.

The present invention is not limited to the above-described embodiments, and various changes may be made without departing from the scope of the claims, and embodiments obtained by appropriately combining technical means disclosed in different embodiments are also included in the technical scope of the present invention.

EXAMPLES

Hereinbelow, the present invention will be described in more detail with reference to examples and comparative examples, but the present invention is not limited thereto.

In the following production examples, examples, and comparative examples, "part" and "%" represent part by weight and % by weight, respectively. Abbreviations represent the following substances.

BA: butyl acrylate
MA: methyl acrylate
MMA: methyl methacrylate
EHA: 2-ethylhexyl acrylate
MAA: methacrylic acid
AIMA: allyl methacrylate
CHP: cumene hydroperoxide
tDM: tertiary dodecyl mercaptan

It is to be noted that measuring methods used in the following examples and comparative examples to measure physical properties are as follows.

(1) Polymerization Conversion Ratio

An obtained (meth)acrylic resin latex was dried in a hot air drier at 120°C for 1 hour to determine its solid content, and a polymerization conversion ratio was calculated from the following formula.

```
Polymerization Conversion Ratio (%) = 100 × solid content/total
amount of monomers loaded
```

(2) Average Particle Size of Acrylic Acid Alkyl Ester-Based Crosslinked Elastic Particles

The volume-average particle size (Å) of obtained acrylic acid alkyl ester-based crosslinked elastic particles was measured by a light scattering method using MICROTRAC UPA150 manufactured by LEED & NORTHRUP INSTRUMENTS.

(3) Acid Value

An acid value was measured in the following manner.

1) Titration of Resin: The acid value of acrylic rubber particles was measured using the resin powder of obtained acrylic rubber particles as a measuring object, and the acid value of the entire resin was measured using obtained resin pellets as a measuring object. After 0.30 g of each of the measuring objects was dissolved in 37.5 mL of methylene chloride, 37.5 mL of dimethyl sulfoxide was added. Two droplets of a phenolphthalein/ethanol solution (1 wt%) were added to this solution. Then, 5 mL of a 0.1 N aqueous sodium hydroxide solution was added, and 0.1 N hydrochloric acid was immediately dropped into this solution and the amount A (mL) of 0.1 N hydrochloric acid added dropwise by the time when the red-violet color of the solution disappeared was measured. The titration should be completed within 1 minute because the value is changed by long-term stirring after dropping of the aqueous sodium hydroxide solution.
2) Titration of Blank: Two droplets of a phenolphthalein/ethanol solution (1 wt%) was added to 37.5 mL of methylene chloride and 37.5 mL of dimethyl sulfoxide. Then, 5 mL of a 0.1N sodium hydroxide solution was added thereto. Then, 0.1 N hydrochloric acid was dropped into this solution and the amount B (mL) of 0.1 N hydrochloric acid added dropwise by the time when the red-violet color of the solution disappeared was measured. The titration should be completed within 1 minute.
3) The acid value (total amount of acid groups and acid anhydride groups) in the resin was defined as C (mmol/g) and determined by the following formula. C = 0.1 × (5 - A - B)/0.3
4) Glass Transition Temperature (Tg)

A glass transition temperature was measured using 10 mg of obtained resin pellets and a differential scanning calorimeter DSC (DSC-50 model manufactured by Shimadzu Corporation) in a nitrogen atmosphere at a temperature rise rate of 20 °C/min and determined by a midpoint method.

(5) MI Value

An MI value was measured by subjecting evaluation pellets to measurement using a melt indexer (manufactured by Yasuda Seiki Seisakusho Ltd.) under a load of 10 kg at 230°C. The evaluation pellets used were prepared by drying obtained resin pellets at 90°C for 5 hours or longer.

(6) Adhesive Strength of Metal Coating Film

Aluminum, tin, or indium was vacuum-deposited as a metal on one surface of an obtained film at $4.5 \times 10^{-5}$ Torr using SRC-10-D manufactured by ULVAC, Inc. to produce a metal vapor-deposited film. The thickness of the metal coating film of aluminum, tin, or indium was set to a value within the range of 150 to 1500 angstroms. Further, the thickness of a metal coating film of $SiO_2$ or chromium formed by sputtering was set to a value within the range of 200 to 500 angstroms.

A primer (SB-1200 manufactured by UNITIKA Ltd.) was applied onto a metal surface of the metal vapor-deposited film and dried in an oven at 70 to 100°C to remove a solvent. Then, the metal vapor-deposited film was cut into a 1.5 cm $\times$ 11 cm piece to prepare a sample A for evaluating metal vapor-deposition. The same primer as described above was applied onto a PET film (Lumirror manufactured by Toray Industries, Inc.) and dried. Then, the PET film was cut into a 2.0 cm $\times$ 12 cm piece to prepare a PET sample B.

The sample A for evaluating metal vapor-deposition and the PET sample B were arranged so that their primer surfaces faced to each other and heat-pressed (at 5 points per sample) at 130°C $\times$ 2 kgf $\times$ 40 s by placing a heating unit of a heat seal tester (manufactured by Yasuda Seiki Seisakusho Ltd.) on the PET sample B side. The sample A for evaluating metal vapor-deposition was gripped and pulled by a PUSH-PULL SCALE (manufactured by IMADA Co., Ltd.) in the direction of 90° (relative to the PET sample B placed horizontally on a substrate) to measure peel strength at middle three points out of the five pressed points. The adhesive strength of the metal coating film was evaluated according to the following criteria.

 A: 250 g or more
 B: 150 g or more but less than 250 g
 C: less than 150 g

(7) External Appearance

The number of fisheyes present in the obtained A4-size film (thickness: 75 $\mu$m) was counted by naked eyes. The external appearance of the film was evaluated according to the following criteria.

 A: The number of fisheyes having a size of 0.05 mm$^2$ or larger but smaller than 0.2 mm$^2$ was less than 250.
 B: The number of fisheyes having a size of 0.05 mm$^2$ or larger but smaller than 0.2 mm$^2$ was 250 or more but less than 1000.
 C: The number of fisheyes having a size of 0.05 mm$^2$ or larger but smaller than 0.2 mm$^2$ was 250 or more and the number of fisheyes having a size of 0.2 mm$^2$ or larger was 10 or more.

(8) Processability

A determination was made as to whether or not cracking occurred when the obtained film was slit by a cutter in the process of winding up the film and the film could be wound up. Evaluation criteria are as follows.

 A: The film could be wound up without cracking.
 B: Slight cracking occurred, but the film could be wound up.
 C: Cracking occurred and the film could not be wound up due to fracture.

Production Example C1-1: Production of Acrylic Rubber Particles

The following substances were put in an 8-liter polymerization apparatus equipped with a stirrer.

| deionized water | 200 parts |
| sodium dioctyl sulfosuccinate | 0.25 parts |
| sodium formaldehyde sulfoxylate | 0.15 parts |
| disodium ethylenediaminetetraacetate | 0.005 parts |
| ferrous sulfate | 0.0015 parts |

The inside of the polymerization apparatus was sufficiently purged with nitrogen gas to create a substantially oxygen-free condition, and then the temperature in the apparatus was set at 60°C. Then, 45 parts of a mixture of raw materials of acrylic acid alkyl ester-based crosslinked elastic particles shown in a column C1-1 in Table 1 (i.e., a mixture containing 1.7 parts of AIMA and 0.2 parts of CHP with respect to 100 parts of a monomer mixture composed of 90% of BA and 10% of MMA) was continuously added at a rate of 10 parts/hr. After the completion of the addition, polymerization was further continued for 0.5 hour to obtain acrylic acid alkyl ester-based crosslinked elastic particles. The polymerization conversion ratio was 99.5% and the average particle size was 800 Å.

Then, 0.3 parts of sodium dioctylsulfosuccinate was put therein, and then the temperature in the apparatus was set at 60°C. Then, 55 parts of a monomer mixture (E) shown in column C1-1 in Table 1 (i.e., a mixture containing 0.4 parts of tDM and 0.4 parts of CHP with respect to 100 parts of a monomer component composed of 10% of BA and 90% of MMA) was continuously added at a rate of 10 parts/hr, and the polymerization was further continued for 1 hour to obtain an acrylic rubber particle latex. The polymerization conversion ratio was 99.0%.

The thus obtained latex was salted out with an aqueous calcium chloride solution, solidified, washed with water, and dried to obtain resin powder C1-1 of acrylic rubber particles.

Production Examples 1-2 to 1-6

Resin powders C1-2 to C1-6 of acrylic rubber particles were obtained by performing polymerization, solidification, washing with water, and drying in the same manner as in Production Example C1-1 except that the composition of the acrylic acid alkyl ester-based crosslinked elastic particles and the composition of the monomer mixture (E) were changed to those shown in columns C1-2 to C1-6 in Table 1.

Table 1

| | | Production Examples | | | | | |
|---|---|---|---|---|---|---|---|
| | | 1-1 | 1-2 | 1-3 | 1-4 | 1-5 | 1-6 |
| Acrylic Rubber Particles | | C1-1 | C1-2 | C1-3 | C1-4 | C1-5 | C1-6 |
| Acrylic Acid Ester-Based Crosslinked Elastic Particles | parts by weight | 45 | 45 | 45 | 45 | 45 | 45 |
| | BA (%) | 90 | 90 | 90 | 90 | 90 | 90 |
| | MMA (%) | 10 | 10 | 10 | 10 | 10 | 10 |
| | AIMA (parts) | 1.7 | 1.7 | 1.7 | 1.7 | 1.7 | 1.7 |
| | CHP (parts) | 0.2 | 0.2 | 0.2 | 0.2 | 0.2 | 0.2 |
| Monomer Mixture (E) | parts by weight | 55 | 55 | 55 | 55 | 55 | 55 |
| | MMA (%) | 90 | 93 | 82 | 69 | 64 | 36 |
| | MAA (%) | 0 | 2 | 9 | 12 | 18 | 36 |
| | BA(%) | 10 | 5 | 9 | 18 | 18 | 28 |
| | tDM (parts) | 0.4 | 0.4 | 0.4 | 0.4 | 0.4 | 0.4 |
| | CHP (parts) | 0.4 | 0.4 | 0.4 | 0.4 | 0.4 | 0.4 |
| MAA Content of Entire Acrylic Rubber Particles (parts by weight) | | 0 | 1 | 5 | 7 | 10 | 20 |
| Acid Value (mmol/g) | | 0 | 0.12 | 0.58 | 0.81 | 1.2 | 2.4 |

## EP 2 631 272 A1

Examples 1 to 6 and Comparative Examples 1 to 3

A thermoplastic resin (manufactured by Sumitomo Chemical Co., Ltd. under the trade name of SUMIPEX EX, acid value: 0 mmol/g) and each of the resin powders C1-1 to C1-6 of acrylic rubber particles were melt-kneaded in proportions shown in Table 2 using a 40 mmφ single-screw extruder with vent at a cylinder temperature of 270°C to obtain resin pellets of a (meth)acrylic resin composition.

The pellets were dried at 100°C for 8 hours or longer and fed into a 40 mmφ single-screw T-die film extruder with vent at a cylinder temperature of 240°C and a die temperature of 240°C to obtain a resin film.

The characteristics of the obtained film were evaluated. The results are shown in Table 2 together with the acid value of the (meth)acrylic resin composition (the acid value of an entire resin).

Table 2

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Composition (parts) | Thermoplastic Resin | EX | 47 | 47 | 47 | 47 | 53 | 53 | 47 | 47 | 33 |
| | Acrylic Rubber Particles | C1-1 | | | | | | | 53 | | |
| | | C1-2 | | | | | | | | 53 | |
| | | C1-3 | 53 | | | | 47 | | | | |
| | | C1-4 | | 53 | | | | 47 | | | |
| | | C1-5 | | | 53 | | | | | | |
| | | C1-6 | | | | 53 | | | | | 67 |
| MI [g/10 min.] | | | | 3.4 | | | 3.5 | 4.3 | | | |
| Tg | | | | 110.0 | | | 111.1 | 112.2 | | | |
| Acid Value (mmol/g) | | | 0.3 | 0.4 | 0.6 | 1.2 | 0.3 | 0.4 | 0.0 | 0.06 | 1.6 |
| Evaluations of Film | Type of Metal | | Al | Al | Al | Al | Al | Al | Al | Al | Al |
| | Adhesive Strength | | A | A | A | A | A | A | C | B | A |
| | External Appearance | | A | A | A | A | A | A | A | A | C |
| | Processability (Film Winding Properties) | | A | A | A | A | A | A | A | A | B |

The films of Examples 1 to 6 were excellent in both adhesiveness to metal and external appearance. The film of Comparative Example 1 was excellent in external appearance but poor in adhesiveness to metal. The film of Comparative Example 2 was superior in adhesiveness to metal to the film of Comparative Example 1, but was not at a practical level. The film of Comparative Example 3 was excellent in adhesiveness to metal, but poor in external appearance because streaks with thickness, flow marks, fisheyes, and the like were formed due to high viscosity.

Example 7 and Reference Examples 1 to 4

A resin film was obtained in the same manner as in Example 1 except that each thermoplastic resin mentioned below and the resin powder C1-1 or C1-4 of acrylic rubber particles were mixed in proportions shown in Table 3.
Trade Name ALTUGLAS HT121 manufactured by ARKEMA, Acid Value: 0.38 mmol/g
Trade Name: SUMIPEX EX manufactured by Sumitomo Chemical Co., Ltd., Acid Value: 0 mmol/g
Trade Name: SUMIPEX MM manufactured by Sumitomo Chemical Co., Ltd., Acid Value: 0 mmol/g
The characteristics of the obtained film were evaluated. The results are shown in Table 3 together with the acid value of the (meth)acrylic resin composition (the acid value of an entire resin).

Table 3

| | | | Example 7 | Reference Example 1 | Reference Example 2 | Reference Example 3 | Reference Example 4 |
|---|---|---|---|---|---|---|---|
| Composition (parts) | Thermoplastic Resin | HT121 | | 100 | | | 47 |
| | | EX | | | 100 | | |
| | | MM | 47 | | | 100 | |
| | Acrylic Rubber Particles | C1-4 | 53 | | | | |
| | | C1-1 | | | | | 53 |
| Acid Value (mmol/g) | | | 0.4 | 0.4 | 0.0 | 0.0 | 0.2 |
| MI [g/10 min.] | | | | 8.7 | 6.2 | | |
| Tg | | | | 122 | | | |
| Evaluations of Film | Type of Metal | | Al | Al | Al | Al | Al |
| | Adhesive Strength | | A | B | C | C | C |
| | External Appearance | | A | A | A | A | B |
| | Processability (Film Winding Properties) | | A | C | C | C | B |

The film of Example 7 was excellent in both external appearance and adhesiveness to metal. The films of Reference Examples 1 to 3 had no adhesiveness to metal, and were likely to crack and therefore could not be wound up. The film of Reference Example 4 was superior in external appearance and film winding properties to the films of Reference Examples 1 to 3 but was poor in adhesiveness to metal.

Examples 8 to 11

A resin film was obtained in the same manner as in Example 1 except that a thermoplastic resin (manufactured by Sumitomo Chemical Co., Ltd. under the trade name of SUMIPEX EX, acid value: 0 mmol/g) and the resin powder C1-4 of acrylic rubber particles were mixed in proportions shown in Table 4.

The adhesive strength of metal coating film of the obtained film was evaluated. The result is shown in Table 4 together with the acid value of the (meth)acrylic resin composition (the acid value of an entire resin).

Table 4

| | | | Example 8 | Example 9 | Example 10 | Example 11 |
|---|---|---|---|---|---|---|
| Composition (parts) | Thermoplastic Resin | EX | 47 | 47 | 47 | 47 |
| | Acrylic Rubber Particles | C1-4 | 53 | 53 | 53 | 53 |
| Acid Value (mmol/g) | | | 0.4 | 0.4 | 0.4 | 0.4 |
| Evaluations of Film | Type of Metal | | Sn | In | Cr | $SiO_2$ |
| | Adhesive Strength | | A | A | A | A |

The films were excellent in adhesiveness to tin, indium, and chromium as metal and adhesiveness to silicon oxide as metal oxide.

**Claims**

1. A (meth)acrylic resin film comprising acrylic rubber particles (A) having an acid value of 0.2 mmol/g or more, wherein the acid value of the entire resin constituting the film is 0.15 mmol/g or more but 1.5 mmol/g or less.

2. The (meth)acrylic resin film according to claim 1, further comprising a thermoplastic resin (B) having no acid group and no acid anhydride group.

3. The (meth)acrylic resin film according to claim 1 or 2, wherein the acrylic rubber particles (A) contain at least one kind of acrylic acid units or methacrylic acid units.

4. The (meth)acrylic resin film according to any one of claims 1 to 3, wherein 3 parts by weight or more but 20 parts by weight or less of (meth)acrylic acid units are contained in 100 parts by weight of the acrylic rubber particles (A).

5. The (meth)acrylic resin film according to any one of claims 1 to 4, wherein the acrylic rubber particles (A) are obtained by polymerization of a monomer mixture (E) containing an unsaturated carboxylic acid and/or its derivative in the presence of acrylic acid alkyl ester-based crosslinked elastic particles (a), the acrylic acid alkyl ester-based crosslinked elastic particles (a) having an average particle size of 500 to 3000 Å.

6. The (meth)acrylic resin film according to any one of claims 1 to 5, wherein the resin constituting the film has a Tg of 120°C or lower.

7. A metal-laminated (meth)acrylic resin film obtained by directly vapor-depositing metal or metal oxide on the (meth)acrylic resin film according to any one of claims 1 to 6.

8. A metal-laminated (meth)acrylic resin sheet obtained by bonding a resin film or sheet to a metal layer surface of the metal-laminated (meth)acrylic resin film according to claim 7 with an adhesive layer being interposed between them.

## INTERNATIONAL SEARCH REPORT

| | International application No. |
|---|---|
| | PCT/JP2011/005816 |

**A. CLASSIFICATION OF SUBJECT MATTER**
*C08L33/06*(2006.01)i, *B32B15/082*(2006.01)i

According to International Patent Classification (IPC) or to both national classification and IPC

**B. FIELDS SEARCHED**

Minimum documentation searched (classification system followed by classification symbols)
C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/056769 A1 (Kaneka Corp.), 15 May 2008 (15.05.2008), paragraphs [0138], [0163] & US 2010/0092792 A1 & EP 2090617 A1 | 1-8 |
| A | JP 2010-37429 A (Kaneka Corp.), 18 February 2010 (18.02.2010), entire text (Family: none) | 1-8 |
| A | JP 2003-253016 A (Sumitomo Chemical Co., Ltd.), 10 September 2003 (10.09.2003), entire text (Family: none) | 1-8 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 November, 2011 (10.11.11) | 22 November, 2011 (22.11.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/005816

C (Continuation). DOCUMENTS CONSIDERED TO BE RELEVANT

| Category* | Citation of document, with indication, where appropriate, of the relevant passages | Relevant to claim No. |
|---|---|---|
| A | JP 57-200412 A (Asahi Chemical Industry Co., Ltd.), 08 December 1982 (08.12.1982), entire text & US 4521568 A1 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59046784 A